Europäisches Patentamt

European Patent Office

Office européen des brevets

(19)

(11) Publication number : **0 288 322 B1**

# EUROPEAN PATENT SPECIFICATION

(12)

(45) Date of publication of patent specification :
05.02.92 Bulletin 92/06

(51) Int. Cl.⁵ : **A01D 90/08,** A01D 85/00

(21) Application number : **88303713.7**

(22) Date of filing : **25.04.88**

(54) **A bale accumulator.**

(30) Priority : **24.04.87 GB 8709737**

(43) Date of publication of application :
**26.10.88 Bulletin 88/43**

(45) Publication of the grant of the patent :
**05.02.92 Bulletin 92/06**

(84) Designated Contracting States :
**BE FR LU NL**

(56) References cited :
EP-A- 0 053 211
DE-A- 2 851 117
FR-A- 2 563 965
US-A- 4 310 275
US-A- 4 312 245

(73) Proprietor : **BROWNS AGRICULTURAL
MACHINERY COMPANY LIMITED
Mentmore Road Linslade
Leighton Buzzard Bedfordshire LU7 7NX (GB)**

(72) Inventor : **Brown, Arthur William Gray
Two Trees Heath Park Road
Leighton Buzzard Bedfordshire (GB)**
Inventor : **Lovell, Stephen
58 Stewartby Road
Stewartby, Bedford Bedfordshire (GB)**
Inventor : **Read, James William
102 Vandyke Road
Leighton Buzzard Bedfordshire (GB)**

(74) Representative : **Symes, Christopher A. et al
FORRESTER & BOEHMERT
Widenmayerstrasse 4
W-8000 München 22 (DE)**

EP 0 288 322 B1

## Description

The present invention relates to a bale accumulator of the type to be used in conjunction with, or form part of, a baler, the accumulator receiving bales from the baler and having the capability of holding or storing a plurality of bales so that they may be deposited on the ground together, or otherwise be removed from the accumulator.

Such bale accumulators are well known and comprise two basic types.

A first type of baler relies on mechanical means or hydraulic means to move the bales into a predetermined array and then deliver the array onto the ground or onto a vehicle, such type of accumulator being described in British Patent Specification No. 1,101,667.

A second type of bale accumulator, sometimes known as a bale sledge, allows contact between the ground and the bale so that bales are removed automatically to the rear of the accumulator or sledge by the relative motion between the accumulator and the ground. Such an accumulator is described in British Patent Specification No. 2,086,306B.

In the past it was usual for hay and straw to be baled to standard sized bales of dimensions approximately one metre long and the above two mentioned Patent specifications show bale sledges for dealing with bales of such a size.

More recently cylindrical bales have become increasingly common and also "big bales", that is a bale of a shape not dissimilar to the original rectangular bales but having considerably larger dimensions, and some of which are approximately 2.5 metres long.

The present invention relates to an accumulator for accumulating bales and has particular application to the accumulation of "big bales".

An accumulation of big bales provides certain problems because of the size and considerable weight of such bales, and whereas the accumulation of the original small rectangular bales enabled the bales to be "dropped" from the baler onto a receiving station of the accumulator, the size and weight of big bales does not permit of such delivery methods.

Another problem with the collating of big bales is that they are delivered continuously from the baler, one bale juxtaposed with the next, and careless separation of a bale which has just been formed from one that is still being formed in the baler can cause damage, not only to the bale but may affect operation of the baler itself.

U.S. patent specification A4312245, which discloses an accumulator with the features of the preamble of claim 1, discloses a bale accumulator having a chassis and a bale receiving bed comprising a central part and two side parts, a bale is received on the central part and may be moved either to one side part or the other side part, the side parts being movable to a bale delivering position to deliver the bales stored thereon to the ground. Whereas the bale accumulator is large enough to support three bales, it cannot deliver an array of three bales to the ground since the central part has to remain fixed to receive bales from the baling machine.

It is an object of the present invention to provide a bale accumulator that is suitable, not only for the collation of conventional small bales but also suitable for the collation of big bales.

According to the present invention, we provide a bale accumulator having a chassis, a bale receiving bed mounted on said chassis, movement means to move bales received by said accumulator from a baler so as to position them on different areas of said bed, the bed having a first entry part and a second movable part, said second movable part being movable from a bale receiving position to a bale delivering position and additional movement means provided to move said movable part of said bed from said bale receiving position to said bale delivering position, characterised in that said first entry part and said movable part are relatively arranged such that the last bale of an array of bales to be formed by said accumulator is positioned such that it overlies part of said movable part of said bed and at least a part of said entry part of the bed and in that the additional movement means are arranged such that initial movement of said movable part from its bale receiving position to its bale delivering position is in a direction so as to cause movement of said last bale away from the next bale to be delivered onto said bed.

Said bale accumulator may comprise a part of a baling machine or alternatively may comprise a wheeled chassis and be adapted for travelling alongside or behind a baler so as to received bales onto the bale receiving bed. Conveniently said accumulator is adapted for connecting to the baler itself so as to be towed behind the baler.

In the case where said chassis is adapted to be towed behind the baler, the wheels carried by said chassis are mounted for at least limited swivelling movement about an axis inclined to the vertical so as to provide a castor angle.

Preferably said initial movement causes said "last bale" to be moved away from said next bale in a direction substantially the same as the direction of movement of a bale from the baler onto said bed.

Preferably said means for moving said part of said bed comprises a hydraulic ram.

The bed of said accumulator is preferably situated at a height above the ground such that undesired contact between the bed and the ground is unlikely to occur even on relatively rough terrain.

Conveniently, movement of said bed from its bale receiving position to its bale delivering position enables at least one end or one side of said bed to be situate considerably nearer the ground than when in its bale receiving position.

Preferably, said part of said bed has a bale delivering position, in which it delivers bales to the ground, in which the bed is at a substantial angle to the horizontal, thus enabling the bales to be delivered to the ground by virtue of a gravitational force.

Conveniently the bales may be moved from the baler onto the bale accumulator bed by virtue of power means associated with the baler, thus further assistance to move the bales onto the bed is not required.

The powered means for moving the bales into different positions may comprise mechanical, electromechanical or hydraulic means and conveniently comprises a hydraulic ram which acts indirectly via pusher means on a bale to move it transversely to its direction of travel onto the bed.

Preferably, the bale receiving bed is situate directly above the wheel supporting said accumulator, thereby ensuring that the width of the accumulator is efficiently used being substantially the same as the combined width dimension of the accumulated bales.

The provision of an entry part enables return of the movable part of the bed from its bale delivering position to its bale receiving position without inteferring with the entry of a first part a following bale in a direction towards the bale receiving bed.

Operation of the means to move the bales into different positions on the bed and operation of the bed itself from its bale receiving position to its bale delivering position may be either manual or automatic and is preferably automatic.

Sensing means may be provided on different parts of the bed to sense the position of bales delivered thereon and when such bales take up a predetermined position, said movement means may be initiated to move said bale to a predetermined position, movement of a subsequent bale onto said bale receiving bed initiating further operation of said movement means until an array of bales on said bed is completed. On completion of said array further sensing means may be triggered to cause operation of said bed movement means to cause movement of the bed from the bale receiving position to the bale delivering position.

One example of a bale accumulator according to the present invention will now be described in more detail, by way of example only, with reference to the accompanying drawings, wherein :

FIGURE 1 is a side elevation of a bale accumulator ;

FIGURE 2 is a plan view of the bale accumulator shown in Figure 1 ;

FIGURE 3 is a rear end view of the bale accumulator shown in Figures 1 and 2 ;

FIGURE 4 is a diagram showing bale positioning on the accumulator shown in Figures 1 to 3.

The bale accumulator shown in the drawings comprises a chassis generally indicated at 10 and comprising side members 11 and 12 each having an upwardly extending forward part 13 and 14 and a pair of rearward downwardly depending parts, one of which is shown at 15.

The members 11 and 12 carry respective wheel mounting assemblies 17 and 18, each wheel assembly being mounted for pivotal movement relative to the chassis about an axis slightly inclined to the vertical, each assembly 17 and 18 carrying a pair of wheels generally indicated at 19 and 20 respectively.

The side members 11 and 12 are secured to each other by transverse members 21 and 23 and a draw bar 24 is connected to the transverse member 23 and has a connection 25 to enable connection to a baling machine.

Movement of the bales onto the bale accumulator is due to action of the baler itself and it is important that the bale is not unduly disturbed, thus the wheels 19 and 20 of the accumulator are designed to be castor wheels and the linkage between the accumulator and the baler not only comprises a draw bar 25 but also lateral links 22a and 22b, the links 22a and 22b may be provided with ball and socket or other connections at either end thereof permitting of relative movement to allow pitch or roll, but at all times maintaining the accumulator directly behind the baler.

A pair of ram mounting points 30 and 31 are each connected to a respective upright 13, 14 by connecting members 32 and 33 and 34 and 35.

A movable part 36 of a bale accumulating bed comprises a plurality of longitudinal members, such as those shown at 37 and 38, the longitudinal members being interconnected by transverse members 39, 40, 41 and 42.

Each side of the movable part 36 of the bale accumulating bed is provided with a side frame 26 and 27 each comprising an upper longitudinal rail 28 and 29 respectively supported from the bed 36 by a plurality of upwardly extending members 28a, 28b, 28c and 29a, 29b, 29c respectively. The upwardly extending members are angled towards the centre of the bale accumulating bed so that any bale supported by the bed is contacted only by the rail 28 or 29 thus preventing undesired contact between the bale and any other lateral part of the accumulator.

A movable "tailgate" is provided and comprises a transverse bar 50 connected to the chassis by means of links, one of which is shown at 44, the transverse bar 50 also being connected to the bed 36 by a pair of links, one of which is shown at 43, the link 43 being pivotally connected to a bracket 46 which is secured to a lateral longitudinal member 48 of the bed 36.

The link 44 is pivotally connected at 49 to bracket 51 secured to downwardly depending member 15.

An identical linkage arrangement is provided on the other side of the accumulator. The transverse bar 50 interconnecting the linkage members on each side and is arranged with its longitudinal axis in line with the pivotal connection 45 and the corresponding pivotal connection 56 on the other side of the accumulator.

When the bed is in the bale receiving position, i.e. substantially horizontal position, the bar 50 will prevent bales, such as the bale shown at 60, from unintentional movement rearwardly off the bed 36.

The movable part 36 of the bale receiving bed is adapted to rest on the chassis 10 when in a bale receiving substantially horizontal position.

A pair of pivotal links are provided to interconnect the rear of the chassis 10 to the bed 36, one of said links being shown at 61 and being pivotally connected about the same axis as pivotal connection 49 and also being pivotally connected at 62 to the lateral longitudinal member 48 of the bale receiving bed, the other side of the accumulator is provided with an identical link to that shown at 61.

The front end of lateral member 48 is provided with a pivotal connection 64 by means of which it is pivotally connected to support member 65 which carries a bracket 66. The other end of the support member 65 is pivotally connected at 67 to a bracket 68 providing on upright member 13.

The bracket 66 is provided with pivotal connection 68 to which is connected the piston 69 of a hydraulic ram generally shown at 70, the cylinder 71 being connected at pivotal connection 72 to ram mounting plate 30.

The ram mounting plate 31 on the opposite side of the accumulator is provided with pivotal linkage extending from connecting bracket 74 provided on upright 14 to the longitudinal lateral member 75 identical to that as aforedescribed with reference to the other side of the accumulator.

The movable part 36 of the bed is also provided with a pusher member, generally indicated at 80 and comprising longitudinal member 81, upright members 82 and 83, pusher member 80 being connection via transverse members 85 and 86 to a further longitudinal member 87 which is connected to a piston 88 of ram 89, the cylinder 90 being connected to chassis member 12.

Transverse members 85 and 86 are provided with respective roller assemblies 91, 92, 93 and 94 which are guided in transverse members 40 and 42 so that activation of ram 89 enables the pusher member 80 to move transversely of the bed of the accumulator.

The accumulator is provided with a bale entry region generally indicated at 96 and comprising a plurality of longitudinal members such as those shown at 97 and 98 secured together by transverse members 99, 100, 101, the entry part 96 of the bed being secured to the chassis so that it is not movable with the movable part 36 of the bed of the accumulator.

The operation of the accumulator will now be described.

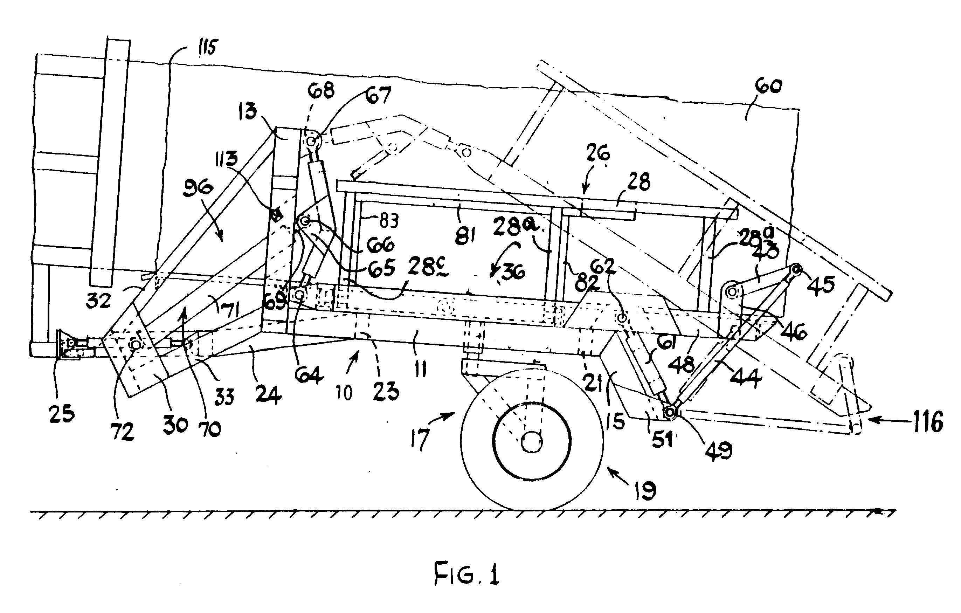

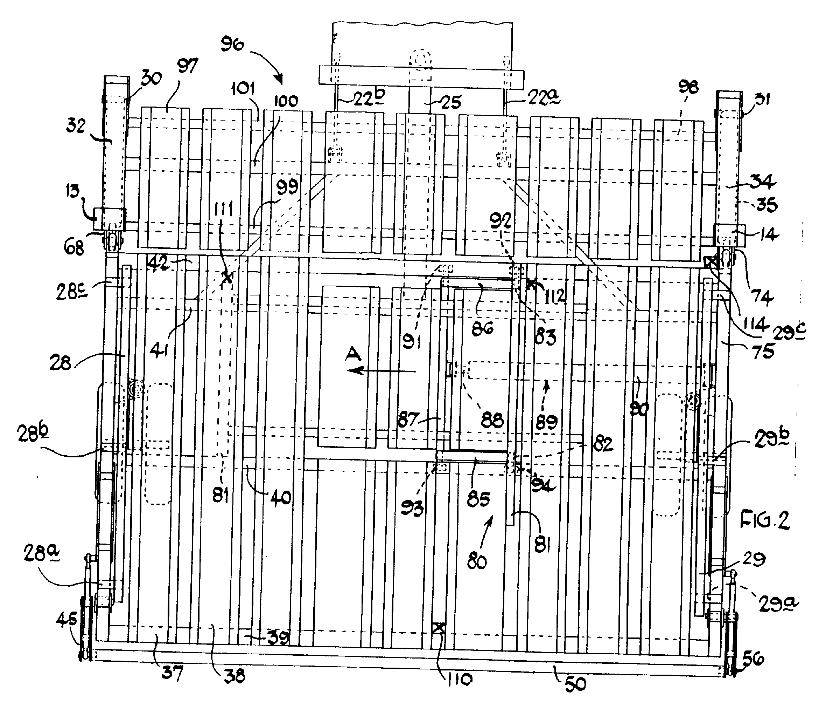

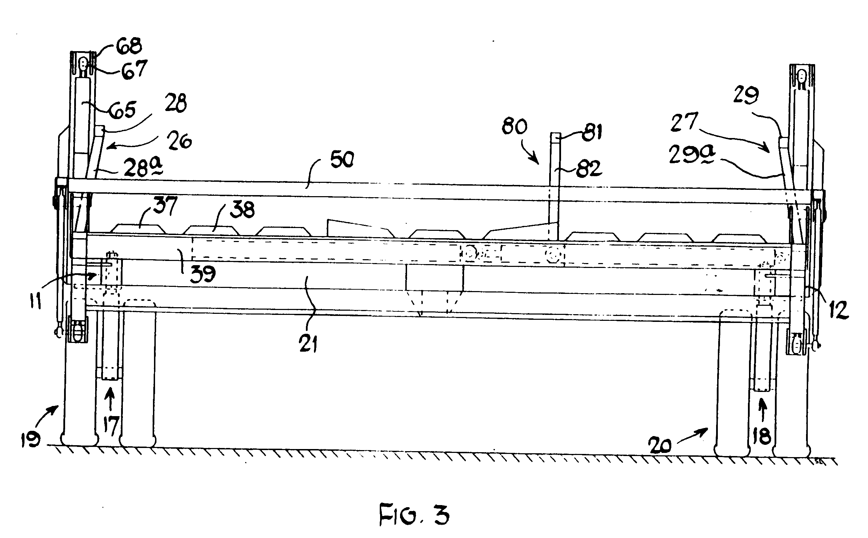

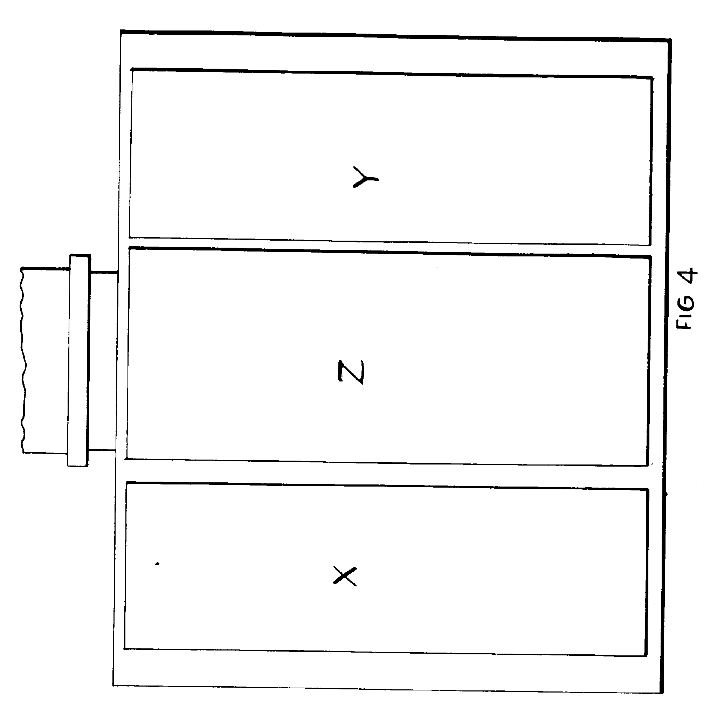

In use of the accumulator, the bed is maintained in a position resting upon the chassis in its bale receiving position, that is the position shown in bold outline in Figure 1 and in which it is substantially horizontal assuming that the ground on which it is resting is substantially horizontal.

A bale 60 enters onto the bed and when the bale (which if it is a big bale is approximately 2.5 metres long, is pushed by the baling machine so that it reaches the back of the accumulator, sensing means such as a microswitch 110 will be operated by the bale itself which causes activation of ram 89.

Activation of ram 89 causes pusher member 80 to be moved transversely in a direction as shown by arrow A and the bale 60 will be pushed across the bed of the accumulator to take up a position as shown by X in the schematic diagram shown in Figure 4.

As the pusher member 80 pushes the bale 60 across the bed, the transverse member 86 will come into contact with microswitch 111 when the bale is in its position juxtaposed with the side of the accumulator. Contact with microswitch 111 causes the ram 89 to cease moving and thus the bale will remain in the position as designated by X in Figure 4.

The pusher member remains in the position as shown in dotted outline in Figure 2 until the next bale once again causes operation of sensing means 110, the ram 89 is then activated in the other direction and pusher member 80 pushes the bale to the take-up position as shown by Y in Figure 4.

Contact between the transverse member 86 and microswitch 112 or other suitable sensing means once again ceases operation of ram 89 thus the second bale on the accumulator remains in the position as shown at Y in Figure 4.

The pusher member remains in the position as shown in bold outline in Figure 2 and a third bale takes up a position Z between bales X and Y until the sensing means 110 is once again activated by contact with the bale.

The ram 70 is then activated to cause movement of the bed from its bale receiving position to a bale delivering position.

Activation of the ram 70 causes the bed to move towards its bale delivering position and movement of the bed will cause movement of the tailgate comprising the transverse bar 50 and its associated linkage since the transverse bar 50 is pivotally connected both to the bed and to the chassis. As the ram 70 continues to act, the bed will be moved towards the position as shown in dotted outline in Figure 1 in which the transverse bar 50 is moved clear of the upper surface of the bed, thus allowing the bales to slide off the bed onto the ground. It will also be seen that the tail end of the bed 116 is considerably nearer the ground that it is in its bale receiving position, thus permitting of easy and careful delivery of the bales from the bed onto the ground.

The three bales X, Y and Z may then slide gently together onto the ground and the bed 36 is returned by ram 70 or under the force of gravity to its bale receiving position.

As the movable part 36 of the bale receiving bed is tipped towards its bale delivering position, the ram 70 will continue to cause movement of the movable part 36 of the bed until microswitch 113 is activated by contact with the ram 70, such contact will cause the action of the ram to reverse and movement of the movable part 36 of the bed will then be from the bale delivering position towards the bale receiving position until it takes up the position shown in bold outline in Figure 1, whereupon microswitch 114 or some other suitable sensing means is activated by contact with the movable part of the bed which ceases operation of ram 70, the bed is then fully returned into its 'at rest' on the chassis 10.

Because of the arrangement of the linkage between the bed and the chassis, the initial movement of the bed will be such that a gap is immediately created in the region of the line 115 shown in Figure 1, since the initial movement of the bed is in a direction so as to move the bale last positioned on the bed in a direction almost oppositely away from the leading end of the bale to the next position on the bed 36.

During delivery of the bales to the ground the X bale will at all times be moving in a direction towards the bale receiving bed. However, the length of time necessary for movement of the bed 36 from the bale receiving position to the bale delivering position and back again to the bale receiving position is sufficiently fast to ensure that, even when the baler is working at a relatively fast rate, the leading edge of the next bale has not progresses further than the entry part 96 of the bale receiving bed, thus the bed can be returned properly to its bale receiving position without interferring with the next bale to be placed thereon.

It will be appreciated that the bale accumulator described herein is just one example of the present invention and it is envisaged that such an accumulator may alternatively, with slightly modified bale movement means, accommodate different shapes, sizes and numbers of bales, whithin the scope of the claims.

## Claims

1. A bale accumulator having a chassis (10), a bale receiving bed mounted on said chassis, movement means (80) to move bales received by said accumulator from a baler so as to position them on different areas of said bed, the bed having a first entry part (96) and a second movable part (36), said second movable part (36) being movable from a bale receiving position to a bale delivering position and additional movement means (70) provided to move said movable part (36) of said bed from said bale receiving position to said bale delivering position, characterised in that said first entry part (96) and said movable part (36) are relatively arranged such that the last bale of an array of bales to be formed by said accumulator is positioned such that it overlies part of said movable part (36) of said bed and at least a part of said entry part (96) of the bed and in that the additional movement means (70) are arranged such that initial movement of said movable part (36) form its bale receiving position to its bale delivering position is in a direction so as to cause movement of said last bale away from the next bale to be delivered onto said bed.

2. A bale accumulator according to Claim 1, the said accumulator being adapted to be connected to a baler characterised in that the wheels (19 and 20) carried by said chassis (10) are mounted for at least limited swivelling movement about a substantially vertical axis or an axis inclined to the vertical so as to provide a castor angle, so as to enable said accumulator to be substantially rigidly secured to said baler.

3. A bale accumulator according to Claim 1 or Claim 2 characterised in that said initial movement of said movable part (36) of said bed causes the last bale of the array to be moved away from the said next bale in a direction substantially the same as the direction of movement of the bale from the baler on to said bed.

4. A bale accumulator according to any one of the preceding Claims characterised in that movement of the movable part (36) of said bed from its bale receiving position to its bale delivering position enables at least one end (116) or one side of said movable part (36) to be situated considerably nearer the ground than when in its bale receiving position.

5. A bale accumulator according to any one of the preceding Claims characterised in that said movable part (36) of said bed has a bale delivering position, in which it delivers bales to the ground, in which position said movable part (36) is at a substantial angle to the horizontal so as to enable the bales to be delivered to the ground by virtue of gravitational force.

6. A bale accumulator according to any one of the preceding Claims characterised in that the bales are moved from the baler onto the bale accumulator bed (96, 36) by virtue of power means associated with a baler or, where the baler is a towed implement by virtue of power means associated with the towing vehicle.

7. A bed accumulator according to any one of the preceding Claims characterised in that at least the movable part (36) of the bale receiving bed is situate directly above the wheels (19 and 20) supporting said accumulator.

8. A bale accumulator according to any one of the preceding Claims wherein said bales are positioned on said bale receiving bed in a manner characterised in that at least a part of each bale rests upon the entry part (96) of the bed.

9. A bale accumulator according to Claim 8 characterised in that the movement of said movable part of the bed to deliver the bales to the ground causes that part of each bale overlying the entry part (96) of the bed to be moved from the entry part (96) to the bed in a direction at least initially substantially parallel thereto and at a speed faster than the delivery of the next bale onto said accumulator from said baler.

## Patentansprüche

1. Ballensammelvorrichtung mit einem Chassis (10), einem Ballenaufnahmebett, das auf dem Chassis angebracht ist, einer Bewegungseinrichtung (80), um die von der Sammelvorrichtung von einer Ballenpresse empfangenen Ballen zu bewegen, um sie auf unterschiedlichen Bereichen des Bettes zu positionieren, wobei das Bett einen ersten Eingangsabschnitt (96) und einen zweiten beweglichen Abschnitt (36) umfaßt, wobei der bewegliche Abschnitt (36) von einer Ballenempfangsposition in eine Ballenförderposition bewegbar ist, und mit einer weiteren Bewegungseinrichtung (70), die zum Bewegen des beweglichen Abschnittes (36) des Bettes von der Ballenempfangsposition in die Ballenförderposition vorgesehen ist, dadurch **gekennzeichnet**, daß der erste Eingangsabschnitt (96) und der bewegliche Abschnitt (36) derart zueinander angeordnet sind, daß der letzte Ballen eines von der Sammelvorrichtung auszubildenden Ballenfeldes derart positioniert ist, daß er über einem Teil des beweglichen Abschnitts (36) des Bettes und mindestens einem Teil des Eingangsabschnitts (96) des Bettes liegt, und daß die weitere Bewegungseinrichtung (70) derart angeordnet ist, daß Initial-Bewegung des beweglichen Abschnitts (36) von dessen Ballenempfangsposition in dessen Ballenförderposition in einer Richtung liegt, so daß eine Bewegung des letzten Ballens weg von dem nächsten auf das Bett zu fördernden Ballen bewirkt wird.

2. Ballensammelvorrichtung nach Anspruch 1, wobei die Sammelvorrichtung dazu ausgelegt ist, mit einer Ballenpresse verbunden zu werden, dadurch **gekennzeichnet**, daß die Räder (19 und 20), welche von dem Chassis (10) getragen sind, für zumindest eine begrenzte Schwenkbewegung um eine im wesentlichen vertikale Achse oder eine Achse angebracht sind, die bezüglich der Vertikalen geneigt ist, so daß ein Anstellwinkel geschaffen ist, so daß die Sammelvorrichtung im wesentlichen starr an der Ballenpresse befestigt sein kann.

3. Ballensammelvorrichtung nach Anspruch 1 oder 2, dadurch **gekennzeichnet**, daß die Initialbewegung des beweglichen Abschnitts (36) des Bettes bewirkt, daß der letzte Ballen des Feldes weg von dem nächsten Ballen bewegt wird, und zwar in eine Richtung, die im wesentlichen dieselbe wie die Richtung der Bewegung des Ballens von der Ballenpresse auf das Bett ist.

4. Ballensammelvorrichtung nach einem der vorangehenden Ansprüche, dadurch **gekennzeichnet**, daß eine Bewegung des beweglichen Abschnitts (36) des Bettes von dessen Ballenempfangsposition in dessen Ballenförderposition wenigstens einen Endabschnitt (116) oder eine Seite des beweglichen Abschnitts (36) dazu in die Lage versetzt, dem Boden merklich näher als in dessen Ballenempfangsposition angeordnet zu sein.

5. Ballensammelvorrichtung nach einem der vorangehenden Ansprüche, dadurch **gekennzeichnet**, daß der bewegliche Abschnitt (36) des Bettes eine Ballenförderposition aufweist, in der er Ballen auf den Boden fördert, wobei der bewegliche Abschnitt (36) in der genannten Position in einem beträchtlichen Winkel zu der Horizontalen liegt, so daß die Ballen mittels der Gravitationskraft auf den Boden gefördert werden können.

6. Ballensammelvorrichtung nach einem der vorangehenden Ansprüche, dadurch **gekennzeichnet**, daß die Ballen von der Ballenpresse auf das Bett (96, 36) der Ballensammelvorrichtung bewegt werden, und zwar mittels einer Antriebseinrichtung, die einer Ballenpresse zugeordnet ist, oder, wenn die Ballenpresse ein geschlepptes Gerät ist, mittels einer Antriebseinrichtung, die dem Schleppfahrzeug zugeordnet ist.

7. Ballensammelvorrichtung nach einem der vorangehenden Ansprüche, dadurch **gekennzeichnet**, daß mindestens der bewegliche Abschnitt (36) des Ballenaufnahmebettes direkt über den Rädern (19 und 20) angeordnet ist, welche die Sammelvorrichtung tragen.

8. Ballensammelvorrichtung nach einem der vorangehenden Ansprüche, bei der die Ballen auf dem Ballenaufnahmebett in einer Weise angeordnet sind, die dadurch **gekennzeichnet** ist, daß mindestens ein Teil eines jeden Ballens auf dem Eingangsabschnitt (96) des Bettes ruht.

9. Ballensammelvorrichtung nach Anspruch 8, dadurch **gekennzeichnet**, daß die Bewegung des beweglichen Abschnittes des Bettes zum Fördern der Ballen auf den Boden denjenigen Teil eines Jeden Ballens, der auf dem Eingangsabschnitt (96) des Bettes liegt, dazu, bringt, von dem Eingangsabschnitt (96) zu dem Bett in einer Richtung bewegt zu werden, die zumindest anfänglich parallel dazu liegt, und zwar mit einer Geschwindigkeit, die schneller ist als die Förderung des nächsten Ballens von der Ballenpresse auf die Sammelvorrichtung.

## Revendications

1. Groupeur de balles comportant un châssis (10), un plateau de réception de balles monté sur ledit châssis, des moyens de déplacement (80) destinés à déplacer des balles reçues d'une presse à balles par ledit groupeur de façon à les positionner sur des zones différentes dudit plateau, le plateau ayant une première partie d'entrée (96) et une deuxième partie mobile (36), ladite deuxième partie mobile (36) étant mobile d'une position de réception des balles vers une position de sortie des balles, et des moyens de déplacement additionnels (70) prévus pour déplacer la partie mobile (36) du plateau de la position de réception des balles vers la position de sortie des balles, caractérisé en ce que la première partie d'entrée (96) et la partie mobile (36) sont disposées de manière relative de telle sorte que la dernière balle d'une rangée de balles devant être formée par le groupeur est positionnée de façon à chevaucher une partie de la partie mobile (36) du plateau et au moins une partie de la partie d'entrée (96) du plateau, et en ce que les moyens de déplacement additionnels (70) sont agencés de telle sorte que le déplacement initial de la partie mobile (36) de sa position de réception de balles vers sa position de sortie de balles se fait dans une direction telle que ladite dernière balle s'écarte de la balle suivante devant être acheminée sur ledit plateau.

2. Groupeur de balles selon la revendication 1, ledit groupeur étant prévu pour être relié à une presse à balles, caractérisé en ce que les roues (19 et 20) portées par ledit châssis (10) sont montées en pivotement, même limité, autour d'un axe sensiblement vertical ou d'un axe incliné par rapport à la verticale de façon à procurer un angle de chasse, de façon à permettre au groupeur d'être fixé de manière sensiblement rigide à la presse à balles.

3. Groupeur de balles selon la revendication 1 ou 2, caractérisé en ce que le déplacement initial de ladite partie mobile (36) du plateau amène la dernière balle de la rangée à s'écarter de ladite balle suivante dans une direction qui est sensiblement celle du déplacement de la balle pour passer de la presse à balles sur ledit plateau.

4. Groupeur de balles selon l'une quelconque des revendications précédentes, caractérisé en ce que le déplacement de la partie mobile (36) du plateau de sa position de réception des balles vers sa position de sortie des balles permet à au moins une extrémité (116) ou un côté de ladite partie mobile (36) d'être situé considérablement plus près du sol que lorsqu'il est dans sa position de réception des balles.

5. Groupeur de balles selon l'une quelconque des revendications précédentes, caractérisé en ce que la partie mobile (36) du plateau possède une position de sortie des balles, dans laquelle elle délivre des balles sur le sol, ladite partie mobile (36) faisant dans cette position un angle substantiel par rapport à l'horizontale de façon à permettre aux balles d'être délivrées sur le sol sous l'effet de la gravité.

6. Groupeur de balles selon l'une quelconque des revendications précédentes, caractérisé en ce que les balles sont déplacées de la presse à balles sur le plateau du groupeur de balles (96, 36) grâce à des moyens motorisés associés à une presse à balles ou, lorsque la presse à balles est un outil tracté, grâce à des moyens motorisés associés au véhicule tracteur.

7. Groupeur de balles selon l'une quelconque des revendications précédentes, caractérisé en ce qu'au moins la partie mobile (36) du plateau de réception de balles se situe directement au-dessus des roues (19 et 20) supportant ledit groupeur.

8. Groupeur de balles selon l'une quelconque des revendications précédentes, dans lequel lesdites balles sont positionnées sur le plateau de réception de balles d'une manière caractérisée en ce qu'au moins une partie de chaque balle repose sur la partie d'entrée (96) du plateau.

9. Groupeur de balles selon la revendication 8, caractérisé en ce que le déplacement de la partie mobile du plateau afin de délivrer les balles sur le sol amène cette partie de chaque balle qui chevauche la partie d'entrée (96) du plateau à être déplacée de la partie d'entrée (96) vers le plateau dans une direction au moins initialement sensiblement parallèle à celui-ci et à une vitesse plus élevée que l'acheminement de la balle suivante depuis la presse à balles sur le groupeur.

FIG. 1

FIG.2

FIG. 3

FIG 4

EP 0 288 322 B1